# EUROPÄISCHE PATENTSCHRIFT

(11) **EP 0 468 365 B1**
(45) Veröffentlichungstag und Bekanntmachung des Hinweises auf die Patenterteilung: **29.09.1993**
(21) Anmeldenummer: 91112014.5
(22) Anmeldetag: 18.07.1991
(51) Int. Cl.: B60N 3/14, F23Q 7/00

(54) **Elektrischer Zigarettenanzünder**
Electric cigarette lighter
Briquet électrique pour cigarettes

(30) Priorität: 24.07.1990 DE 4023473
(43) Veröffentlichungstag der Anmeldung: 29.01.1992
(73) Patentinhaber: SCHOELLER & CO. Elektrotechnische Fabrik GmbH & Co., D-60559 Frankfurt (DE)
(72) Erfinder: Merchel, Roland, W-6070 Langen (DE); Fischer, Alexander, W-6380 Bad Homburg (DE); Zeuner, Gerhard, W-6240 Königstein (DE); Dietz, Günther, W-5600 Wuppertal 1 (DE); Dabringhaus, Volker, W-5600 Wuppertal 1 (DE); Wegel, Peter, W-5600 Wuppertal 2 (DE)

(56) Entgegenhaltungen:
- DE-A- 3 019 323
- DE-A- 3 241 173
- DE-A- 3 924 560
- US-A- 2 247 093
- US-A- 2 310 029
- US-A- 2 473 890

## Beschreibung

Die Erfindung betrifft einen elektrischen, insbesondere im Armaturenbrett eines Kraftfahrzeugs zu installierenden Zigarettenanzünder nach dem Oberbegriff des Anspruchs 1.

Zigarettenanzünder, bei welchen ein unter Federdruck stehender Heizkörper von außen mittels eines Betätigungsknopfes zwischen Bimetallfedern eingedrückt wird, um einen elektrischen Kontakt im Heizstromkreis des Heizkörpers zu schließen, sind in vielfältigen Ausführungsformen bekannt. Nachdem die Bimetallfedern eine bestimmte Auslösetemperatur erreicht haben, federn sie auf und geben den Heizkörper frei. Der Heizkörper federt nunmehr unter der Wirkung der Rückstellkraft einer Rückstellfeder wieder in seine Ausgangsposition zurück.Vorteilhaft ist bei derartigen druckbetätigbaren Zigarettenanzündern der gute Kontaktschluß und vor allem die sichere Kontakttrennung.

Das Eindrücken eines Betätigungsknopfes ist aber aus mehreren Gründen auch nachteilig. So kann es beispielsweise vorkommen, daß während des Eindrückens des Betätigungsknopfes Fingernägel abgebrochen werden. Bei in Fahrzeugschubaschern installierten Zigarettenanzündern ist es ferner von Nachteil, daß die Eindrückrichtung des Betätigungsknopfes weitgehend mit der Schubrichtung des Aschers zusammenfällt. Dann kann es geschehen, daß anstelle der Aktivierung des Zigarettenanzünders die Ascherschublade geschlossen wird, wobei es zusätzlich auch noch dazu kommen kann, daß sich der Zigarettenanzünder-Benutzer die Finger einklemmt.

Es sind deshalb auch Zigarettenanzünder bekannt, die nur durch eine Drehbewegung des Betätigungsknopfes einschaltbar sind. Hierbei wird das Heizelement in seiner Einschaltstellung solange verriegelt, bis es die erforderliche Glühtemperatur erreicht hat. Dann löst ein Temperaturfühler, vorzugsweise eine Bimetallfeder, die Verriegelung, so daß das Heizelement und der Betätigungsknopf mittels einer Rückstellfeder gemeinsam wieder in ihre Ausgangsstellung zurückgedreht werden. Vorteilhaft ist hierbei, daß im Gegensatz zu druckbetätigbaren Zigarettenanzündern das Heizelement beim Rückstellvorgang nicht aus der Anzündersteckdose axial herausgeschleudert werden kann.

In der US-Patentschrift 23 10 029 ist ein Zigarettenanzünder offenbart, bei welchem ein Thermoschalter mit Bimetallstreifen und mit Rückstellfedern versehen ist. Das Heizelement wird so lange von Kontaktfingern gehalten, bis der Anzünderstecker aus der Anzündersteckdose herausgezogen wird.

Bei den aus den deutschen Patentschriften DE-PS 30 19 323 und DE-PS 32 41 173 bekannten Zigarettenanzündern werden hingegen die auf einen Aschenkragen mit dem eingebauten Heizelement einwirkenden Bimetallfedern zur Lösung der Verriegelung verwendet. Im Aschenkragen befinden sich deshalb Kontaktklemmen, die mit der Bimetallfeder zusammenwirken und von dieser freigegeben werden, wenn das Heizelement die erforderliche Anzündtemperatur erreicht hat. Dann kann eine Spannfeder das Heizelement und den Griffknopf in die Ausschaltstellung zurückdrehen.

In der älteren, jedoch bezüglich der in Anspruch genommenen Priorität nicht vorveröffentlichten DE-OS 39 24 560 ist ein Zigarettenanzünder beschrieben, bei dem die Drehbewegung des Betätigungsknopfes auf eine mit diesem drehfest, jedoch axial verschiebbar verbundene, an Ihrem freien Ende den Heizkörper tragende Achse übertragbar ist. Zur Axialverschiebung der Achse sind zwei Formkörper mit aufeinanderliegenden, rampenförmigen Erhöhungen vorgesehen, von denen der erste starr mit der Achse und der zweite starr mit einem Steckereinsatzzylinder verbunden ist. Die Rückführung des durch eine überlagerte Dreh-Schub-Bewegung in seine Betriebsstellung geführten Heizkörpers erfolgt mit einer Rückstellfeder, die auf Torsion beansprucht wird. Zur Überwindung der beim Rückstellen an den Formkörpern auftretenden relativ hohen Reibungskräfte muß die nur auf Torsion beanspruchbare Rückstellfeder eine hohe Federkraft aufweisen. Zur Überwindung dieser Federkraft muß der Benutzer wiederum hohe Stellkräfte aufwenden, um den Zigarettenanzünder in seine Einschaltstellung zu bringen.

Aufgabe der Erfindung ist es, die Handhabbarkeit eines Zigarettenanzünders nach dem Oberbegriff des Anspruchs 1 so zu verbessern, daß er relativ leichtgängig betätigt werden kann und dennoch seine selbsttätige Rückführung in die Ausgangsstellung mit hoher Zuverlässigkeit gewährleistet ist.

Diese Aufgabe wird durch die im Anspruch 1 gekennzeichneten Merkmale gelöst. Zweckmäßige Ausgestaltungen und Weiterbildungen des Anmeldungsgegenstandes sind in den Unteransprüchen genannt.

Die leichtere Einstellbarkeit des Zigarettenanzünders wird im wesentlichen dadurch erreicht, daß mit zwei sich überlagernden Federkräften gearbeitet wird, wobei sowohl eine Drehkraft, wie auch eine Schubkraft erzeugt wird. Die sich überlagernden Federkräfte lassen sich besser an die Dreh-Schub-Bewegung der Achse anpassen, so daß insgesamt geringere Stellkräfte erforderlich sind.

Gemäß einer bevorzugten Ausgestaltung der Erfindung sind als Hilfsmittel für die Erzeugung einer Dreh-Schub-Bewegung der Achse zwei Formkörper vorgesehen, die rampenförmige Erhöhungen besitzen, mit denen sie nach Art von schiefen Ebenen aufeinander liegen. Dabei ist ein erster Formkörper starr mit der Achse und ein zweiter Formkörper starr mit dem Steckereinsatzzylinder verbunden. Die Drehbewegung des Drehknopfes wird somit über eine schiefe Ebene in eine Axialbewegung der das Heizelement tragenden Achse umgewandelt. Da jeder Schraubengang bekanntlich eine gewundene, schiefe Ebene darstellt, läßt sich die Erfindung auch dann verwirklichen, wenn mit einem Gewinde, vorzugsweise einem Steilgewinde gearbeitet wird. Wesentlich ist, daß durch die Drehbewegung des Drehknopfes eine axiale Verstellung des Heizkörpers bis in die Raststellung zum Einschalten des Heizkörpers erfolgt.

Nach einer zweiten Variante sind die für die Erzeugung der Dreh-Schub-Bewegung dienenden Hilfsmittel so aufgebaut, daß innerhalb des Steckereinsatzzylinders ein zylindrischer dritter Formkörper angeordnet ist, der mit einer axial verlaufenden Zentralbohrung und mit Schraubengangnuten versehen ist. Ein die Achse quer durchdringender Führungsstift greift mit seinen Enden in die Schraubengangnuten des dritten Formkörpers ein. Eine auf die Achse ausgeübte Drehbewegung bewirkt deshalb gleichzeitig eine axiale Stellungsänderung.

Eine weitere Verbesserung zur leichtgängigen Betätigung des Zigarettenanzünders ist dadurch erreichbar, daß die Formkörper aus einem gleitfähigen Material, vorzugsweise aus Keramik oder Kunststoff hergestellt werden. Im Bereich der Formkörper ist es möglich Material und Gewicht einzusparen, wenn diese entsprechend angeordnete Aussparungen auweisen.

Es ist weiterhin von Vorteil, wenn der hutförmige Drehknopf die axialen Bewegungen der Achse nicht mitmacht, sondern eine zentrisch angeordnete Lagerbuchse besitzt, die ihrerseits eine axial verlaufende Führung der Achse ermöglicht. Der Mitnehmer kann dabei an dem in der Lagerbuchse liegenden Ende der Achse dreh- und schubfest angebracht sein, wobei er innerhalb der Lagerbuchse drehfest, aber axial verschiebbar angeordnet ist. Diese Anordnung kann derart erfolgen, daß die Achse mit einer formschlüssig in den Mitnehmer eingreifenden ersten Abflachung versehen ist und der Mitnehmer eine formschlüssig in die Lagerbuchse eingepaßte zweite Abflachung besitzt, die auf einer Gleitfläche der Lagerbuchse aufliegt und eine axiale Gleitbewegung ermöglicht.

Wird nur eine einzelne, auf Druck und Torsion beanspruchte Rückstellfeder verwendet, so ist es zweckmäßig, diese innerhalb einer Ausnehmung im Drehknopf, vorzugsweise innerhalb der Lagerbuchse, zwischen dem Mitnehmer und einem Anschlag anzuordnen. Bei zwei Rückstellfedern, von denen die erste auf Torsion und die zweite auf Druck beanspruchbar ist, ist es zweckmäßig die zweite Rückstellfeder entsprechend der einzelnen Rückstellfeder innerhalb einer Ausnehmung im Drehknopf anzuordnen, während die erste Rückstellfeder außerhalb der Lagerbuchse konzentrisch zu dieser angeordnet werden kann. Um eine günstige Raumanordnung zu erreichen, ist es vorteilhaft alle Rückstellfedern als Schraubenfedern auszubilden.

Um als Formkörper auch nichtmetallische Werkstoffe mit geringer Gleitreibung verwenden zu können, ist vorgesehen, zwischen dem Steckereinsatzzylinder und der Achse ein die elektrische Verbindung herstellendes Leitblech anzuordnen. Auf diese Weise wird der Stromkreis zum Heizkörper geschlossen.

Während der Drehbetätigung des Drehknopfes wird ein Mitdrehen des Steckereinsatzzylinders dadurch am besten verhindert, daß der Steckereinsatz oder der Steckereinsatzzylinder einen Bund aufweist, der mit dem Flansch der Steckdosenhülse formschlüssig oder zumindest reibungsschlüssig zusammenwirkt. Eine bevorzugte Ausführungsform, den drehbeweglich gelagerten hutförmigen Drehknopf mit dem Steckereinsatzzylinder zu verbinden, besteht darin, daß der Drehknopf in einem Ringgehäuse drehbeweglich, aber schubfrei gelagert wird. Ein leichter Einbau des Drehknopfes wird dadurch gewährleistet, daß das Ringgehäuse kraft- und/oder formschlüssig mit dem Steckereinsatzzylinder kuppelbar ist.

Ausführungsbeispiele der Erfindung sind in den Zeichnungen dargestellt und werden im folgenden näher beschrieben. Es zeigen:
- Fig. 1: einen medianen längsschnitt durch den zigarettenanzünder nach einem ersten Ausführungsbeispiel,
- Fig. 2: einen medianen längsschnitt des zigarettenanzünders nach einem zweiten Ausführungsbeispiel.

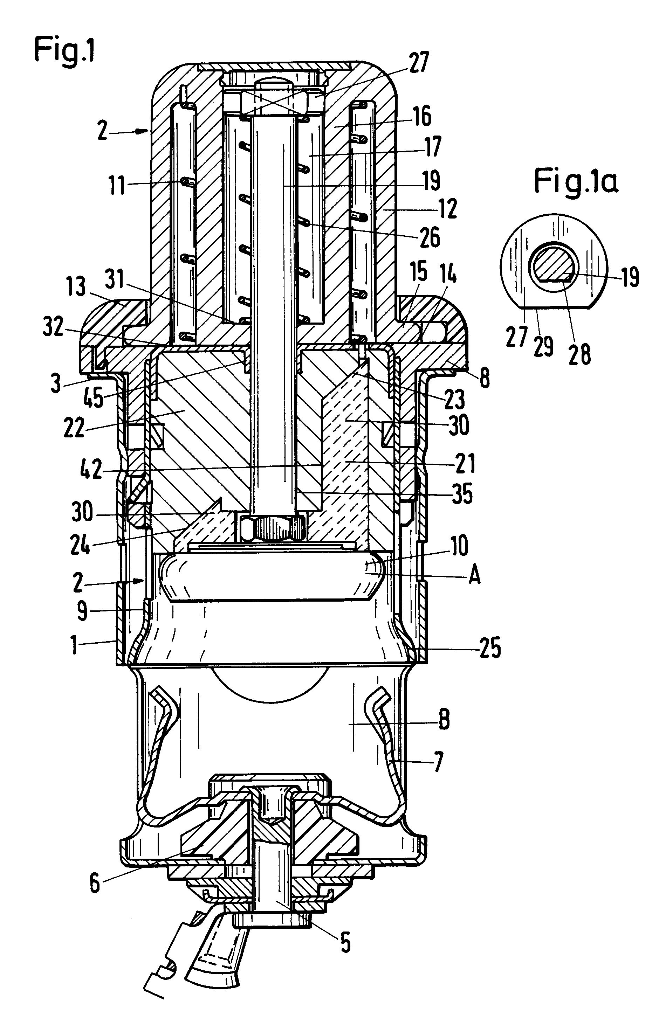

Fig. 1 zeigt einen Längsschnitt durch den erfindungsgemäßen Zigarettenanzünder mit einem als Steckdosenhülse 1 ausgebildeten Aufnahmegehäuse, das beispielsweise in einem nicht dargestellten Fahrzeugascher gehalten ist und mit einem in die Steckdosenhülse 1 einschiebbaren Steckereinsatz 2.

Die Steckdosenhülse 1 weist öffnungsseitig einen Flansch 3 auf, der sich an einer Gehäusewandung 4 des Aschers oder dergleichen abstützt. Bodenseitig trägt die Steckdosenhülse 1 über einen Niet 5 und einen Isolierkörper 6 eine übliche Bimetallfeder 7. Der Steckereinsatz 2 weist einen mit einem Bund 8 versehenen Steckereinsatzzylinder 9 auf, relativ zu dem ein Heizkörper 10 entgegen der Wirkung von Rückstellfedern 11, 26 infolge einer durch die Drehbewegung eines Drehknopfes 12 eingeleiteten Dreh-Schub-Bewegung einer Achse 19 aus einer Ausgangsstellung A in eine Betriebsstellung B axial verschiebbar ist.

Der Bund 8 ist durch ein separat gefertigtes und starr mit dem Steckereinsatzzylinder 9 verbundenes Ringgehäuse 13, vorzugsweise aus Kunststoff, gebildet, das eine Ringnut 14 zur drehbeweglichen Lagerung des mit einem Flansch 15 versehenen Drehknopfes 12 aufweist.

Der hutförmig ausgebildete Drehknopf 12 ist mit einer zentrisch angeordneten Lagerbuchse 16 versehen, in der die Achse 19 durch einen an ihr befestigten Mitnehmer 27 eine Axialführung erfährt. Die Achse 19 trägt an ihrem freien Ende den Heizkörper 10 und an ihrem Schaft einen daran starr angeordneten ersten Formkörper 21. Ein zweiter Formkörper 22 ist starr im Steckereinsatzzylinder 9 befestigt. Die Formkörper, 21, 22 liegen mit rampenförmigen Erhöhungen 23, 24 so aufeinander, daß sich bei einer Drehbewegung des Drehknopfes 12 eine Axialverschiebung der Achse 19 und damit des Heizkörpers 10 gegen die Kraft von Rückstellfedern 11, 26 einstellt.

Die Zwangsführung der beiden Formkörper 21, 22 ist dadurch besonders gut, daß eine im zweiten Formkörper vorgesehene Zentralbohrung 35 relativ lang ist und daß der erste Formkörper 22 an den rampenförmigen Erhöhungen 23, 24 Vorsprünge 30 aufweist, die in eine Nutführung 42 des zweiten Formkörpers 22 formschlüssig eingreifen. Um die Formkörper 21, 22 aus gut aufeinandergleitendem Material, wie z. B. Keramik oder Kunststoff, fertigen zu können, ist zwischen dem Steckereinsatzzylinder 9 und der Achse 19 ein die elektrische Verbindung herstellendes Leitblech 32 vorgesehen.

Ein besonders zuverlässiger Rückstellmechanismus wird dadurch erreicht, daß um die den Heizkörper 10 tragende Achse 19 eine zweite auf Druck beanspruchbare Rückstellfeder 26 gewickelt ist, die sich mit ihrem einen Ende am Boden 31 der Lagerbuchse 16 und mit ihrem anderen Ende an dem an der Achse 19 befestigten Mitnehmer 27 abstützt. Eine erste, auf Torsion beanspruchbare Rückstellfeder 11 ist mit einem ersten Ende 43 in der Innenwand des Drehknopfes 12 verankert und mit einem zweiten Ende 44 im zweiten Formkörper 22 verankert.

Die beiden Rückstellfedern 11, 26 bewirken, daß der Heizkörper 10 nach Freigabe durch die Bimetallfeder 7 durch eine überlagerte Dreh-Schub-Bewegung von der Betriebsstellung B in die Ausgangsstellung A selbsttätig zurückgestellt wird.

Die Drehbewegung des Drehknopfes 12 wird mittels einer zweiten Abflachung 29 des Mitnehmers 27, die formschlüssig an einer in der Lagerbuchse 16 ausgebildeten, sich axial erstreckenden Gleitfläche 17 anliegt, auf den Mitnehmer 27 und von dort mittels einer formschlüssig eingreifenden ersten Abflachung 28 an der Achse 19 auf die Achse 19 übertragen, wie Fig. 1a zeigt.

Der erfindungsgemäße Zigarettenanzünder nach dem ersten Ausführungsbeispiel funktioniert wie folgt:

Aus einer Ausgangsstellung A heraus wird der Drehknopf 12 in der Ringnut 14 des Ringgehäuses 13 so weit verdreht, bis der an der Achse 19 angeordnete Heizkörper 10 in der Bimetallfeder 7 in der Betriebsstellung B einrastet. Da die Achse 19 über den Mitnehmer 27 mit der Lagerbuchse 16 des Drehknopfes 12 drehfest verbunden ist, führt die Achse 19 gleichzeitig mit der Drehbewegung des Drehknopfes 12 eine Drehbewegung durch. Zudem gleitet der Mitnehmer 27 in der Führungsnut 17 axial nach unten auf die Bimetallfeder 7 zu, da der starr mit der Achse 19 verbundene erste Formkörper 21 mit seiner rampenförmigen Erhöhung 23 eine Zwangsführung auf der rampenförmigen Erhöhung 24 des zweiten Formkörpers 22 erfährt.Der Mitnehmer 27 drückt hierbei die zweite Rückstellfeder 26 zusammen. Gleichzeitig wird die erste Rückstellfeder 11 durch Torsion gespannt.

Mit dem Einrasten des Heizkörpers 10 in die Bimetallfeder 7 ist der Stromkreis für die Aufheizung eines im Heizkörper 10 angeordneten Widerstandsdrahts geschlossen. Nachdem die Bimetallfeder 7 ihre Auslösetemperatur erreicht hat, gibt sie den Heizkörper 10 wieder frei, der nunmehr unter der Wirkung der Rückstellkraft der beiden Rückstellfedern 11, 26 mittels einer Dreh-Schub-Bewegung aus der Betriebsstellung B wieder in die Ausgangsstellung A selbsttätig zurückgleitet und dabei auch den Drehknopf 12 zurückdreht. Dem Benutzer des Zigarettenanzünders wird sowohl akustisch durch einen hörbaren "Freigabe-Klick" als auch optisch das Zurückschnappen des Drehknopfes 12 angezeigt, wenn der Heizkörper 10 seine Zündtemperatur erreicht hat.

Bei der Drehbetätigung des Drehknopfes 12 wird ein Mitdrehen des Steckereinsatzzylinders 9 dadurch verhindert, daß der Bund 8 des Steckereinsatzzylinders 9 mit dem Flansch 3 oder einem anderen Teil der Steckdosenhülse 1 formschlüssig, zumindest aber reibschlüssig zusammenwirkt.

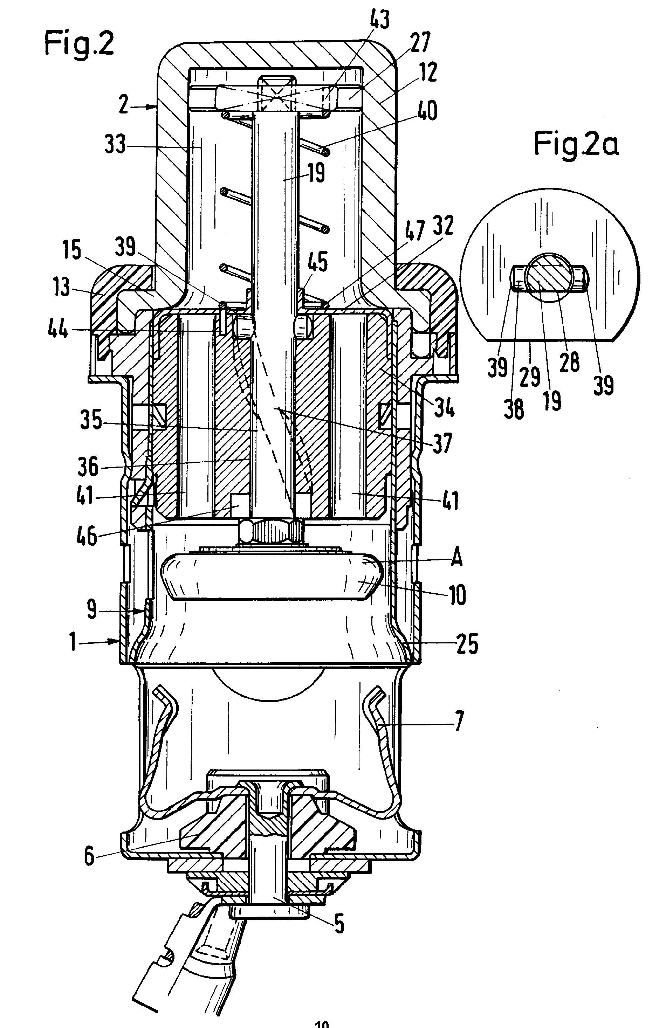

Fig. 2 zeigt einen Längsschnitt durch den erfindungsgemäßen Zigarettenanzünder nach einem weiteren Ausführungsbeispiel. Anstelle von zwei Rückstellfedern wie im zuvor geschilderten Ausführungsbeispiel wird nunmehr nur eine dritte Rückstellfeder 40 verwendet, welche in einer Ausnehmung 33 des Drehknopfes 12 angeordnet ist und zugleich die Funktion einer Druckfeder und einer Torsionsfeder ausübt. Hierzu stützt sich die dritte Rückstellfeder 40 mit ihrem ersten Ende 43 an einem Mitnehmer 27 und mit ihrem zweiten Ende 44 auf einem als elektrischer Verbinder dienenden Leitblech 32 ab. Hierbei liegt ein Kragen 45 des Leitblechs 32 an der den Heizkörper 10 tragenden Achse 19 an.

Wie Fig. 2a zeigt, ist der Mitnehmer 27 mittels einer ersten Abflachung 28 starr mit der Achse 19 verbunden und mittels einer zweiten Abflachung 29 drehfest, aber axial verschiebbar im Drehknopf 12 gelagert.

Im Steckereinsatzzylinder 9 ist drehfest ein dritter Formkörper 34, vorzugsweise aus Keramik oder Kunststoff, eingesetzt, der von dem Leitblech 32 abgedeckt wird. Mehrere parallel zur Achse 19 verlaufende Aussparungen 41 in dem dritten Formkörper 34 bewirken eine Material- und Gewichtseinsparung. Durch eine Zentralbohrung 35 des dritten Formkörpers 34 ragt die Achse 19 hindurch und wird in dieser Zentralbohrung 35 gelagert. An der Innenwand 36 der Zentralbohrung 35 sind zwei sich gegenüberliegende, jeweils über 180° verlaufende Schraubengangnuten 37 vorgesehen, in die ein durch die Achse 19 hindurchgesteckter Führungsstift 38 mit seinen beiden Enden 39 hineinragt. Die Schraubengangnuten 37 sind so ausgebildet, daß beim Drehen des Drehknopfes 12 die Achse 19 nach unten gedrückt wird, bis der Heizkörper 10 in die Bimetallfeder 7 einrastet und dabei eine Drehung um 180° ausführt. In der Betriebsstellung B des Heizkörpers 10 befindet sich der Führungsstift 38 am unteren Ende 46 der Schraubengangnuten 37, während er in der dargestellten Ausgangsstellung A am oberen Ende 47 liegt. Die dritte Rückstellfeder 40 ist mit ihren abgewinkelten Enden 43, 44 in der Laufscheibe 27 und in dem dritten Formkörper 34 verankert, so daß sie beim Drehen des Drehknopfes 12 sowohl eine Torsionskraft als auch eine Druckkraft auf die Achse 19 ausübt. Nach der Freigabe des Heizkörpers 10 durch die Bimetallfeder 7 sorgen diese beiden Kräfte dafür, daß der Heizkörper 10 nebst Achse 19 und der Drehknopf 12 wieder in seine Ausgangsstellung A zurückschnappt.

## Patentansprüche

1. Elektrischer, insbesondere im Armaturenbrett eines Kraftfahrzeuges zu installierender Zigarettenanzünder, mit einer Steckdosenhülse (1) für einen Steckereinsatz (2), der eine Achse (19) besitzt, die am einen Ende mit einem Betätigungsknopf (12) und am anderen Ende mit einem Heizkörper (10) versehen ist, der seinerseits ausgehend von einer Ausgangsstellung (A) entgegen der Rückstellwirkung einer auf Torsion beanspruchbaren ersten Rückstellfeder (11) in eine Betriebsstellung (B) zu bringen ist, in der er vorzugsweise mit Hilfe einer Bimetallfeder (7) verrastet und aus der er nach erfolgter Aufheizung in die Ausgangsstellung (A) durch Federkraft selbsttätig zurückkehrt und mit einem Steckereinsatzhalter (9), der sich beim Einsetzen in die Steckdosenhülse (1) an dieser drehfest fixiert und gegenüber dem die Achse (19) axial verschiebbar angeordnet ist und diese dabei so mit Hilfsmitteln für die Erzeugung einer Dreh-Schub-Bewegung zusammenwirkt, daß bei einer Drehbewegung des Betätigungsknopfes (12) eine Axialverschiebung der Achse erfolgt, dadurch gekennzeichnet, daß eine auf Druck beanspruchbare, koaxial zur Achse (19) angeordnete zweite Rückstellfeder (26,40) von einem an der Achse (19) befestigten Mitnehmer (27) erfaßt und beim Drehen des Betätigungsknopfes (12) in die Betriebsstellung (B) entsprechend der axialen Schubbewegung der Achse (19) komprimiert wird und daß diese zweite Rückstellfeder (26,40) entweder zusätzlich auf Torsion beanspruchbar ist und damit die Funktion der ersten Rückstellfeder (11) mit übernimmt, oder mit der auf Torsion beanspruchbaren ersten Rückstellfeder (11) zusammenwirkt, und daß die sich überlagernden Dreh- und Druck-Federkräfte die Achse (19) aus ihrer Betriebsstellung (B) in ihre Ausgangsstellung (A) zurückbringen.

2. Elektrischer Zigarettenanzünder nach Anspruch 1, dadurch gekennzeichnet, daß die Hilfsmittel für die Erzeugung einer Dreh-Schub-Bewegung in einer ersten Variante zwei Formkörper (21,22) mit aufeinanderliegenden, rampenförmigen Erhöhungen (23,24) besitzen und der erste Formkörper (21) starr mit der Achse (19) und der zweite Formkörper (22) starr mit dem Steckereinsatzzylinder (9) verbunden ist und daß die rampenförmigen Erhöhungen (23,24) vorzugsweise Vorsprünge (30) aufweisen, die in eine Nutführung (42) des zweiten Formkörpers (22) eingreifen.

3. Elektrischer Zigarettenanzünder nach Anspruch 1, dadurch gekennzeichnet, daß die Hilfsmittel für die Erzeugung einer Dreh-Schub-Bewegung in einer zweiten Variante einen innerhalb des Steckereinsatzzylinders (9) angeordneten zylindrischen dritten Formkörper (34) aufweisen, der mit einer axial verlaufenden Zentralbohrung (35) mit Schraubengangnuten (37) versehen ist und daß ein die Achse (19) quer durchdringender Führungsstift (38) mit seinen Enden (39) in die Schraubengangnuten (37) eingreift.

4. Elektrischer Zigarettenanzünder nach einem der vorhergehenden Ansprüche 2 und 3, dadurch gekennzeichnet, daß die Formkörper (21,22,34) aus einem gleitfähigen Material, vorzugsweise aus Keramik oder Kunststoff gefertigt sind.

5. Elektrischer Zigarettenanzünder nach einem der vorhergehenden Ansprüche 2 und 3, dadurch gekennzeichnet, daß die Formkörper (21,22,34) mehrere, zur Material- und Gewichtseinsparung dienende Aussparungen (41) aufweisen.

6. Elektrischer Zigarettenanzünder nach einem der vorhergehenden Ansprüche, dadurch gekennzeichnet, daß der hutförmige Drehknopf (12) eine zentrisch angeordnete Lagerbuchse (16) besitzt, die ihrerseits eine axial verlaufende Führung der Achse (19) ermöglicht.

7. Elektrischer Zigarettenanzünder nach einem der vorhergehenden Ansprüche, dadurch gekennzeichnet, daß der Mitnehmer (27) an dem in der Lagerbuchse liegenden Ende der Achse (19) dreh- und schubfest angebracht ist, und innerhalb der Lagerbuchse (16) drehfest, aber axial verschiebbar angeordnet ist, vorzugsweise derart, daß die Achse (19) mit einer formschlüssig in den Mitnehmer (27) eingreifenden ersten Abflachung (28) versehen ist und der Mitnehmer (27) eine formschlüssig in die Lagerbuchse (16) eingepaßte zweite Abflachung (29) besitzt, die auf einer Gleitfläche (17) der Lagerbuchse aufliegt und eine axiale Gleitbewegung ermöglicht.

8. Elektrischer Zigarettenanzünder nach einem der vorhergehenden Ansprüche, dadurch gekennzeichnet, daß bei nur einer einzelnen, auf Druck und Torsion beanspruchbaren Rückstellfeder (40), diese innerhalb einer Ausnehmung (33) im Drehknopf (12), vorzugsweise innerhalb der Lagerbuchse (16), zwischen dem Mitnehmer (27) und einem Anschlag (31,32) angeordnet ist und daß bei zwei Rückstellfedern (11,26) die auf Druck beanspruchte zweite Rückstellfeder (26) anstelle der einzelnen Rückstellfeder (40) angeordnet ist, während die auf Torsion beanspruchte erste Rückstellfeder (11) außerhalb der Lagerbuchse konzentrisch zu dieser angeordnet ist und daß vorzugsweise alle Rückstellfedern (11,26,40) als Schraubenfedern ausgebildet sind.

9. Elektrischer Zigarettenanzünder nach einem der vorhergehenden Ansprüche, dadurch gekennzeichnet, daß zwischen dem Steckereinsatzzylinder (9) und der Achse (19) ein die elektrische Verbindung herstellendes Leitblech (32) vorgesehen ist.

10. Elektrischer Zigarettenanzünder nach einem der vorhergehenden Ansprüche, dadurch gekennzeichnet, daß der Steckereinsatz (2) und/oder der Steckereinsatzzylinder (9) einen Bund (3,8) aufweist.

11. Elektrischer Zigarettenanzünder nach einem der vorhergehenden Ansprüche, dadurch gekennzeichnet, daß der Drehknopf (12) in einem Ringgehäuse (13) drehbeweglich aber schubfrei gelagert ist und dieses kraft- und/oder formschlüssig mit dem Steckereinsatzzylinder (9) kuppelbar ist.

## Claims

1. Electrical cigarette lighter, particularly for installation in the dashboard of a motor vehicle, with a socket sleeve (1) for a plug-in socket insert (2), which has an axis (19) provided at one end with an actuating button (12) and at the other end with a heater member (10), which is in turn to be brought from an original outset position (A), against the return force of a first return spring (11) which can be subjected to torsion, into an operative position (B), in which it is preferably resiliently locked with the aid of a bimetallic spring (7), and from which it returns automatically under spring force, after heating is completed, into the outset position (A), and with a plug-in socket insert switch (9) which, upon insertion into the socket sleeve (1), fixes non-rotarily on the latter, and with respect to which the axis (19) is axially movably disposed, said axis (19) operating in conjunction with auxiliary means in order to generate a rotary pushing movement in such a way that, upon a rotary movement of the actuating button (12), an axial movement of the axis is effected, characterised in that a second return spring (26, 40) which can be subjected to pressure and is disposed coaxially with the axis (19) is grasped by an entrainment member (27) attached to the axis (19) and, upon rotation of the actuating button (12), is compressed into the operative position (B) in accordance with the axial pushing movement of the axis (19), and in that this second return spring (26, 40) may either be additionally subjected to torsion, thus also taking over the function of the first return spring (11), or alternatively operates in conjunction with the first return spring (11) which can be subjected to torsion, and in that the overlapping rotational and compressive spring forces bring the axis (19) out of its operative position (B) into its outset position (A).

2. Electrical cigarette lighter according to claim 1, characterised in that the auxiliary means in order to generate a rotary pushing movement have, in a first variant, two cast members (21, 22) with ramp-shaped raised portions (23, 24) lying one upon the other, the first cast member (21) being rigidly connected to the axis (19), and the second cast member (22) being rigidly connected to the socket insert cylinder (9), and in that the ramp-shaped raised portions (23, 24) preferably have protrusions (30) which engage in a guide groove (42) of the second cast member (22).

3. Electrical cigarette lighter according to claim 1, characterised in that the auxiliary means in order to generate a rotary pushing movement have, in a second variant, a cylindrical third cast member (34), disposed within the socket insert cylinder (9) and which is provided with an axially-extending central bore (35) with spiral grooves (37), and in that a guide pin (38) passing transversely through the axis (19) engages with its ends (39) in the spiral grooves (37).

4. Electrical cigarette lighter according to one of the preceding claims 2 and 3, characterised in that the cast members (21, 22, 34) are made from a sliding material, preferably from ceramic or plastics material.

5. Electrical cigarette lighter according to one of the preceding claims 2 and 3, characterised in that the cast members (21, 22, 34) have a plurality of openings (41) serving to economise on material and weight.

6. Electrical cigarette lighter according to one of the preceding claims, characterised in that the hat-shaped rotary button (12) has a centrally-disposed bearing bush (16) which in turn enables an axially-extending guidance of the axis (19).

7. Electrical cigarette lighter according to one of the preceding claims, characterised in that the entrainment member (27) is attached, in a non-rotary manner and in a way resistant to pushing force, at the end of the axis (19) lying in the bearing bush and is non-rotarily but axially movably disposed within the bearing bush (16), preferably in such a way that the axis (19) is provided with a first flattened portion (28) positively engaging in the entrainment member (27), and the entrainment member (27) has a second flattened portion (28) fitting positively into the bearing bush (16), said second flattened portion (29) bearing upon a sliding surface (17) of the bearing bush and enabling an axial sliding movement.

8. Electrical cigarette lighter according to one of the preceding claims, characterised in that, when there is only one single return spring (40) which can be subjected to pressure and torsion, said spring (40) is disposed within a recess (33) in the rotary button (12), preferably within the bearing bush (16), between the entrainment member (27) and a stop member (31, 32), and in that, when there are two return springs (11, 26), the second return spring (26) which can be subjected to pressure, is disposed in place of the single return spring (40), while the first return spring (11), which can be subjected to torsion, is disposed externally off the bearing bush and concentric therewith, and in that all the return springs (11, 26, 40) are preferably designed as helical springs.

9. Electrical cigarette lighter according to one of the preceding claims, characterised in that a conductor plate (32) producing the electrical connection is provided between the socket insert cylinder (9) and the axis (19).

10. Electrical cigarette lighter according to one of the preceding claims, characterised in that the socket insert (2) and/or the socket insert cylinder (9) has a collar (3, 8).

11. Electrical cigarette lighter according to one of the preceding claims, characterised in that the rotary button (12) is mounted rotarily movably but without pushing movement in an annular casing (13), and the latter may be power-lockingly or positively coupled to the socket insert cylinder (9).

## Revendications

1. Allume-cigarettes électrique destiné à être monté notamment dans le tableau de bord d'une automobile et comprenant un fourreau (1) pour une broche d'allumage (2) qui comporte, d'une part un axe (19) portant à une extrémité un bouton (12) de manoeuvre et à l'autre extrémité un corps chauffant (10), lequel est destiné à être amené, contre l'action d'un premier ressort de rappel (11), pouvant travailler en torsion, d'une position initiale (A) à une position de service (B) dans laquelle ce corps est retenu élastiquement, avantageusement à l'aide de branches flexibles d'un bilame (7) et d'où, lorsqu'il a été chauffé, il revient automatiquement à la position initiale (A) grâce à une force élastique et, d'autre part, une chemise cylindrique (9) de retenue de la broche d'allumage, qui, lorsqu'elle est insérée dans le fourreau (1), s'y immobilise sans tourner et par rapport à laquelle l'axe (19) peut coulisser axialement, cet axe (19) coopérant avec des éléments auxiliaires destinés à provoquer un mouvement de rotation et de poussée, de façon qu'un pivotement du bouton (12) provoque un déplacement axial dudit axe (19), allume-cigarettes caractérisé en ce qu'un second ressort de rappel (26, 40) compressible, coaxial à l'axe (19), est entraîné par un guide d'entraînement (27) fixé à cet axe (19) et est comprimé dans la position de service (B) par le mouvement axial de poussée dudit axe (19) lorsque le bouton (12) tourne ; et en ce que ce second ressort de rappel (26, 40) peut, soit travailler aussi à la torsion en assumant le rôle du premier ressort de rappel (11), soit coopérer avec ce premier ressort (11) travaillant à la torsion ; et en ce que les forces élastiques superposées de rotation et de compression ramènent l'axe (19), de sa position de service (B) à sa position initiale (A).

2. Allume-cigarettes électrique selon la revendi- cation 1, caractérisé en ce que les éléments auxiliaires destinés à créer un mouvement de rotation et de poussée sont, dans une première variante, deux pièces de forme (21, 22) à prolongements (23, 24) en forme de rampes posées l'une sur l'autre, la première pièce (21) étant solidaire de l'axe (19) et la seconde pièce (22) étant solidaire de la chemise cylindrique (9) ; et en ce que les prolongements (23, 24) comportent avantageusement des protubérances (30) qui sont engagées dans une encoche (42) de guidage ménagée dans la seconde pièce de forme (22).

3. Allume-cigarettes électrique selon la revendication 1, caractérisé en ce que les éléments auxiliaires destinés à créer un mouvement de rotation et de poussée sont, dans une seconde variante, une troisième pièce de forme (34) cylindrique, qui est disposée dans la chemise cylindrique (9) et qui comporte un alésage axial (35) à rainures hélicoïdales (37), les extrémités (39) d'une broche d'entraînement (38), qui traverse perpendiculairement l'axe (19), pénétrant dans ces rainures hélicoïdales (37).

4. Allume-cigarettes électrique selon l'une des revendications 2 et 3, caractérisé en ce que les pièces de forme (21, 22, 34) sont en une matière à faible coefficient de friction, avantageusement une matière céramique ou plastique.

5. Allume-cigarettes électrique selon l'une des revendications 2 et 3, caractérisé en ce que les pièces de forme (21, 22, 34) présentent plusieurs évidements (41), destinés à économiser la matière et à réduire le poids.

6. Allume-cigarettes électrique selon l'une des revendications précédentes, caractérisé en ce que le bouton rotatif (12) en forme de chapeau présente un coussinet (16) central, qui permet de guider axialement l'axe (19).

7. Allume-cigarettes électrique selon l'une des revendications précédentes, caractérisé en ce que le guide (27) d'entraînement est monté sur l'extrémité de l'axe (19) qui se trouve dans le coussinet et est solidaire de cet axe en rotation et axialement et est disposé dans ce coussinet (16) de manière à en être solidaire en rotation, mais à pouvoir y coulisser axialement, avantageusement parce que cet axe (19) présente un premier plat (28) engagé par conformation dans ce guide (27) et que celui-ci présente un second plat (29) qui est ajusté par conformation dans le coussinet (16) et est appliqué contre une surface (17) de glissement de ce dernier en permettant un mouvement axial de coulissement.

8. Allume-cigarettes selon l'une des revendications précédentes, caractérisé en ce que, lorsqu'il n'y a qu'un seul ressort de rappel (40) travaillant à la compression et à la torsion, il est disposé dans un évidement (33) du bouton (12), avantageusement intérieurement au coussinet (16), entre le guide (27) d'entraînement et une butée (31, 32) ; et en ce que, lorsqu'il y a deux ressorts de rappel (11, 26), c'est le second (26), travaillant à la compression, qui est disposé à la place du ressort unique (40), tandis que le premier ressort (11), travaillant à la torsion, est monté à l'extérieur du coussinet et concentriquement à celui-ci, tous ces ressorts de rappel (11, 26, 40) étant avantageusement des ressorts hélicoïdaux.

9. Allume-cigarettes électrique selon l'une des revendications précédentes, caractérisé en ce qu'une lamelle métallique conductrice (32), réalisant la connexion électrique, est disposée entre la chemise cylindrique (9) de la broche d'allumage et l'axe (19).

10. Allume-cigarettes électrique selon l'une des revendications précédentes, caractérisé en ce que la broche d'allumage (2) et/ou la chemise (9) comportent un collet (3, 8).

11. Allume-cigarettes électrique selon l'une des revendications précédentes, caractérisé en ce que le bouton (12) est monté dans un boitier annulaire (13) de façon à pouvoir tourner, mais non se déplacer axialement, ce boîtier pouvant être relié à la chemise (9) par calage forcé et/ou par conformation.
